# DEMANDE DE BREVET EUROPEEN

(11) **EP 1 413 471 A1**
(43) Date de publication de la demande: **28.04.2004**
(21) Numéro de dépôt: 03292519.0
(22) Date de dépôt: 10.10.2003
(51) Int. Cl.: B60N 2/00

(54) **Elément de garnissage comprenant un corps en mousse intégrant une nappe de détection**

(30) Priorité: 14.10.2002 FR 0212733
(71) Demandeur: Centre d'Etude et de Recherche pour l'Automobile ( CERA), 51100 Reims (FR)
(72) Inventeur: Bonfils, Xavier, 51100 Reims (FR)
(74) Mandataire: Derambure, Christian

(57) **Abrégé**

L'invention concerne un élément de garnissage (1) pour siège de véhicule automobile, comprenant un corps en mousse (2) pourvu d'un revêtement, et une nappe de détection (3) de l'enfoncement dudit élément (1), dans lequel la nappe de détection (3) est enrobée dans le corps en mousse (2) de sorte à être positionnée à l'intérieur dudit corps (2) à une profondeur prédéterminée.

L'invention a également pour objet un moule pour la réalisation d'un tel élément de garnissage, ainsi qu'un procédé de réalisation de cet élément de garnissage utilisant un tel moule.

## Description

L'invention concerne un élément de garnissage pour siège de véhicule automobile, comprenant un corps en mousse pourvu d'un revêtement et une nappe de détection de l'enfoncement dudit élément. L'invention concerne également un moule pour la réalisation d'un tel élément, un procédé de réalisation d'un élément de garnissage utilisant un tel moule, et un siège de véhicule automobile comprenant un tel élément.

Pour déceler la présence d'un passager et certaines de ses caractéristiques physiques, la présence d'un dispositif de retenue pour enfant ou de tout autre objet en appui sur la surface du siège, il est connu de prévoir une nappe de détection sur la surface d'au moins un élément de garnissage du siège, notamment l'assise.

On connaît déjà des éléments de garnissage comprenant de telles nappes, ces nappes étant disposées entre le revêtement et le corps en mousse, de sorte à être proches de la zone de contact entre l'élément et l'occupant ou l'objet à détecter. Ce positionnement de la nappe favorise l'efficacité de la détection, mais présente des inconvénients.

En particulier, cette nappe est généralement formée d'une superposition de couches de matière plastique, ce qui lui confère une rigidité supérieure à celle de la mousse formant le corps de l'élément.

Or, la présence d'une nappe rigide à proximité d'un passager rend le siège peu confortable. En outre, le fait que la nappe rigide soit en contact direct avec le revêtement textile induit des problèmes d'aspect.

Pour améliorer le confort et l'aspect de tels sièges, il a été proposé d'utiliser un revêtement textile d'épaisseur plus importante, ou de disposer entre la nappe et le revêtement une couche de mousse spécifique. Toutefois, dans ce cas, la mise en place de la nappe s'effectue par collage, ce qui peut entraîner une mauvaise tenue de la nappe au cours du temps. En outre, les deux solutions proposées impliquent un surcoût important.

Afin de remédier à ces inconvénients, l'invention propose un élément de garnissage pour siège de véhicule automobile comprenant une nappe de détection disposée à l'intérieur du corps en mousse.

Cet agencement présente l'avantage de permettre d'atteindre un confort et un aspect équivalents à ceux d'un élément de garnissage dépourvu de nappe, tout en garantissant une détection efficace. En outre, suivant l'invention, le positionnement de la nappe à l'intérieur du corps en mousse peut être déterminé de sorte à obtenir une détection optimale de l'occupant ou de l'objet concerné, et ce de façon particulièrement simple.

En effet, ce positionnement est réalisé grâce à un outillage spécifique et modulable, qui permet en outre de mettre en oeuvre la technique de moulage dite « in situ » pour la réalisation de l'élément de garnissage. Cette technique présente l'avantage de permettre l'obtention directe de l'élément de garnissage en sortie de moule.

A cet effet, et selon un premier aspect, l'invention propose un élément de garnissage pour siège de véhicule automobile, comprenant un corps en mousse pourvu d'un revêtement, et une nappe de détection de l'enfoncement dudit élément, dans lequel la nappe de détection est enrobée dans le corps en mousse de sorte à être positionnée à l'intérieur dudit corps à une profondeur prédéterminée.

De plus, le fait d'enrober la nappe dans la mousse permet de s'affranchir d'éventuels problèmes de tenue au cours du temps.

Selon un deuxième aspect, l'invention concerne un moule pour la réalisation d'un tel élément de garnissage, du type comprenant une cuve et un couvercle définissant entre eux une cavité de moulage lorsque le moule est fermé, ledit moule comprenant en outre un dispositif de maintien en suspension de la nappe dans la cavité de moulage suivant les directions X, Y et Z.

Selon un troisième aspect, l'invention concerne un procédé de réalisation d'un tel élément de garnissage, utilisant un tel moule, ledit procédé comprenant les étapes successives suivantes :
- associer la nappe au dispositif de maintien en suspension, de sorte que la nappe soit maintenue en suspension dans la cavité de moulage suivant les directions X, Y et Z ;
- injecter une mousse ou un mélange précurseur de mousse à l'intérieur de la cavité de moulage ;
- mouler ledit élément de sorte que la mousse remplisse la cavité de moulage en venant enrober la nappe ;
- démouler ledit élément intégrant la nappe, de sorte à laisser dans le corps des zones dépourvues de mousse.

Selon une première variante du procédé, on prévoit de disposer une coiffe formant revêtement dans la cavité de moulage, préalablement à l'injection de la mousse.

Selon une deuxième variante, la mousse est injectée dans la cavité de moulage directement contre les parois de celle-ci et on associe la coiffe formant revêtement au corps en mousse après le démoulage de celui-ci.

Selon un quatrième aspect, l'invention concerne un siège de véhicule automobile, dans lequel l'assise et/ou le dossier sont formés d'un tel élément de garnissage.

D'autres objets et avantages de l'invention apparaîtront au cours de la description qui suit, faite en référence aux dessins annexés dans lesquels :
- les figures 1 a et 1b sont respectivement une vue schématique en perspective d'un dispositif de maintien en suspension de la nappe selon un premier mode de réalisation, et une vue en coupe transversale d'un élément de garnissage et dudit dispositif après moussage ;
- les figures 2a et 2b sont des vues analogues à celles de la figure 1, montrant le dispositif de maintien selon un deuxième mode de réalisation ;
- les figures 3a et 3b sont des vues analogues à celles de la figure 1, montrant le dispositif de maintien selon un troisième mode de réalisation ;
- les figures 4a et 4b sont des vues analogues à celles de la figure 1, montrant le dispositif de maintien selon une variante du troisième mode de réalisation.

L'élément de garnissage 1 selon l'invention est destiné à un siège de véhicule automobile, et peut être disposé dans l'assise et/ou le dossier du siège.

Cet élément comprend un corps en mousse 2, formé par exemple de polyuréthanne. Ce corps en mousse 2 est pourvu d'un revêtement, notamment textile, permettant de conférer au siège un aspect et une tenue satisfaisantes.

Cet élément 1 comprend en outre une nappe de détection 3 apte à fournir des informations sur l'état d'enfoncement de la surface flexible de l'élément 1, et par conséquent sur la présence éventuelle de passagers ou d'objets en appui sur cette surface, ou bien, de façon plus précise, sur certaines caractéristiques de ceux-ci par cartographie de l'enfoncement détecté.

Selon l'invention, cette nappe 3 est enrobée dans le corps en mousse 2, et ce de sorte à être positionnée à une profondeur prédéterminée. Cette profondeur doit permettre d'assurer une performance optimale en terme de détection, tout en préservant l'aspect du siège et le confort conféré par celui-ci.

Selon une réalisation, la nappe de détection 3 peut être enveloppée, au sein de la mousse, dans un fourreau de protection. Ce fourreau a pour fonction d'éviter une éventuelle contamination par la mousse des composants présents sur la nappe. En outre, la présence de ce fourreau permet de favoriser le glissement de la nappe, ce qui contribue à améliorer ses performances de détection.

En outre, l'élément 1 peut comprendre une nappe chauffante disposée à proximité de la surface de contact entre l'élément 1 et le passager. Le positionnement de la nappe de détection 3 présente dans ce cas l'avantage d'éviter toute problème de compatibilité entre ces deux nappes, celles-ci n'étant pas en contact l'une avec l'autre.

On décrit à présent le procédé de réalisation de l'élément de garnissage 1.

Selon une première variante, ce procédé est réalisé par la technique de moulage dite in situ.

Cette technique consiste typiquement à injecter un mélange précurseur de mousse dans un moule dont la paroi interne a été au préalable recouverte au moins partiellement d'un revêtement.

Le procédé selon l'invention utilise un moule spécifique. De façon connue, ce moule comprend une cuve et un couvercle définissant entre eux une cavité de moulage lorsque le moule est fermé. Il comprend en outre un dispositif de maintien en suspension de la nappe dans les trois directions X, Y et Z. Ce dispositif de maintien est destiné à permettre le positionnement de la nappe 3 dans la cavité de moulage de façon telle que, en sortie de moule, celle-ci soit positionnée à une profondeur prédéterminée dans le corps en mousse 2.

Le dispositif de maintien peut être intégré au moule. Toutefois, en variante, il peut être partiellement ou totalement dissociable du moule.

Dans une première étape du procédé, on prévoit une coiffe formant au moins une partie du revêtement, cette coiffe étant notamment formée d'un matériau textile.

Puis la coiffe est disposée sur une partie de la surface de la cavité de moulage formée entre la cuve et le couvercle du moule. Selon une réalisation, la coiffe est disposée dans la cuve du moule, ses bords étant disposés sur le plan de joint.

Selon une autre réalisation, la coiffe peut être disposée sur le couvercle du moule, et une étape supplémentaire du procédé peut alors consister à disposer une couche de matériau sur la cuve, cette couche de matériau, notamment formée d'un matériau rigide, étant destinée à former une autre partie du revêtement.

L'étape suivante consiste à disposer la nappe 3 sur le dispositif de maintien en suspension préalablement fixé au moule, de sorte que la nappe 3 soit maintenue en suspension dans la cavité de moulage suivant les directions X, Y et Z.

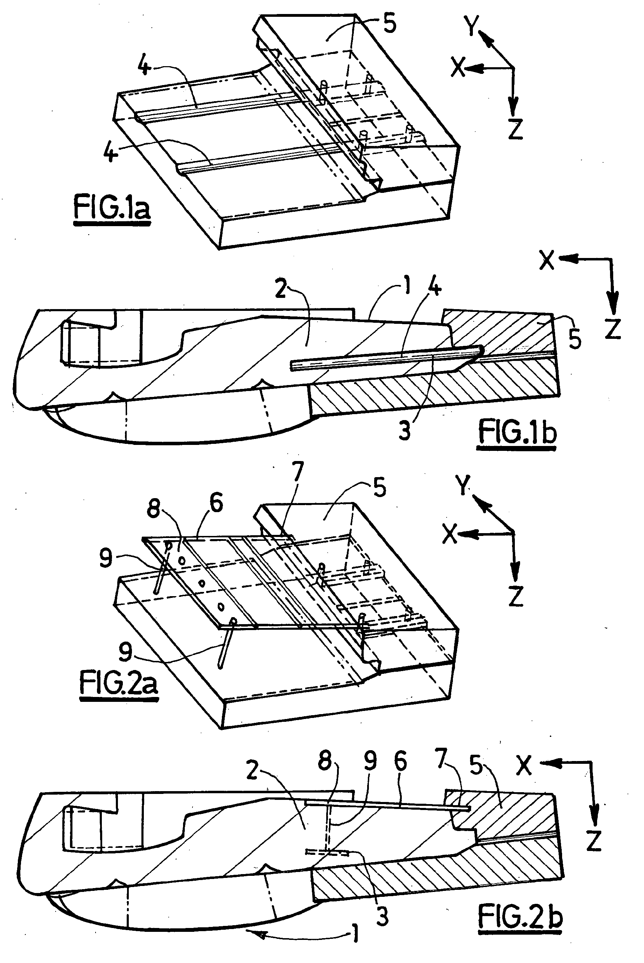

Selon un premier mode de réalisation, représenté sur les figures 1 a et 1b, ce dispositif de maintien en suspension est formé de deux lames 4 s'étendant parallèlement au fond de la cuve, suivant la direction X. La structure et les dimensions de ces lames 4 sont prévues pour que chacune d'entre elles puisse être associée à une nappe de détection 3, et maintenir celle-ci en suspension suivant les directions X et Y. L'association des lames 4 avec les nappes 3 se fait par tous moyens connus, par exemple par collage temporaire, par un système d'aspiration ou par magnétisme.

En outre, les deux lames 4 sont associées par l'une de leurs extrémités à un corps 5 du dispositif, de sorte à permettre le positionnement des nappes 3 suivant la direction Z, à une profondeur prédéterminée. Sur la figure 1b, seule l'une de ces lames 4 à laquelle est associée une nappe 3 est visible, la deuxième lame 4 à laquelle est associée la deuxième nappe 3 étant symétrique par rapport au centre de l'élément 1.

En variante, une seule nappe en forme de U peut être associée aux deux lames 4.

Le dispositif de maintien peut, selon une autre réalisation, comprendre des moyens de positionnement de la nappe 3 dans la cavité de moulage suivant la direction Z. La nappe 3 est associée à ces moyens de positionnement par tous moyens connus.

Selon une première variante de cette réalisation, les moyens de positionnement suivant Z sont directement associés au couvercle du moule par tous moyens connus.

Selon une deuxième variante de cette réalisation, le dispositif comprend en outre un support 6 destiné à maintenir lesdits moyens de positionnement dans la cavité de moulage. Les deux modes de réalisation décrits à présent, en relation avec les figures 2 à 4, illustrent cette variante.

Le support 6 est formé d'un cadre s'étendant sensiblement parallèlement au fond de la cuve, et maintenu par l'une de ses extrémités 7 à un corps 5 du dispositif. L'autre extrémité 8 du cadre est plus particulièrement prévue pour recevoir les moyens de positionnement de la nappe suivant Z, de sorte à maintenir ceux-ci dans la cavité de moulage.

Les moyens de positionnement de la nappe suivant Z comprennent des espaceurs associés sur le support 6, au voisinage de la partie extrême 8 formée d'une traverse.

Selon le mode de réalisation représenté sur les figures 2, ces espaceurs sont formés de tiges 9, représentées au nombre de deux. Toutefois, on peut également prévoir une pluralité de tiges 9 équiréparties le long de la traverse 8, de sorte à limiter au maximum le fléchissement de la nappe 3 lors de l'étape ultérieure de moussage.

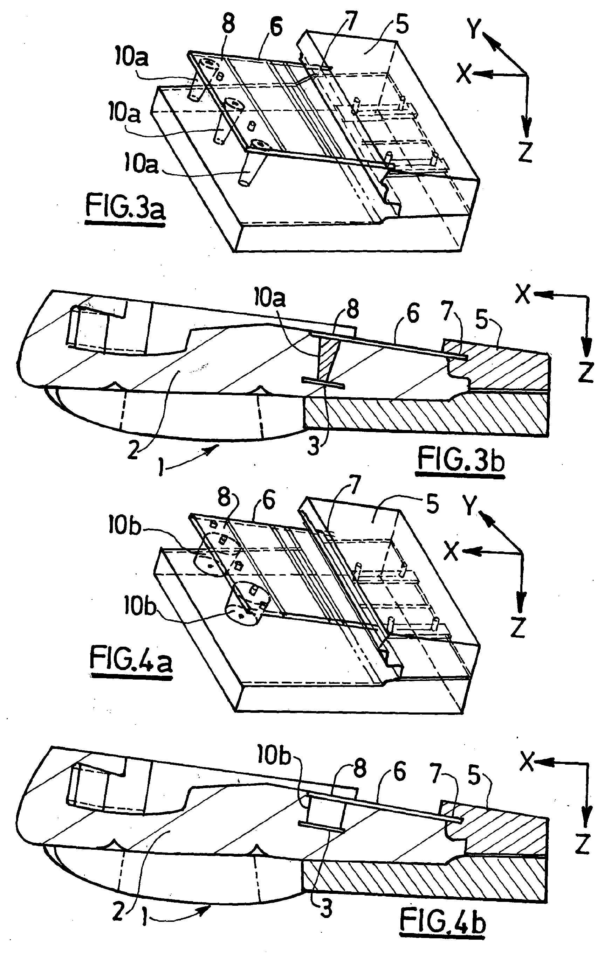

Selon le mode de réalisation du dispositif de maintien représenté sur les figures 3 et 4, les espaceurs sont formés de cônes tronqués 10, la base la plus large de ces cônes 10 étant associée à la traverse 8.

Les cônes 10a représentés sur les figures 3a et 3b sont au nombre de trois, et sont équirépartis sur toute la longueur de la traverse 8. La présence d'un cône central permet de limiter le fléchissement de la nappe 3 lors de son enrobage dans la mousse.

Selon une variante, représentée sur les figures 4a et 4b, les cônes 10b sont au nombre de deux, et sont de hauteur inférieure à celle des cônes 10a représentés sur les figures 3a et 3b, de sorte à positionner la nappe 3 à une profondeur plus importante dans le corps en mousse 2 par rapport à l'utilisateur. En outre, ces cônes 10b sont de diamètre plus large que ceux représentés sur les figures 3a et 3b, leur diamètre étant prévu pour occuper sensiblement toute la largeur de la nappe 3 lorsque celle-ci leur est associée.

Le support 6 et les espaceurs peuvent être intégrés au moule, ou bien être au moins partiellement dissociables du moule. Dans un exemple particulier, le support 6 est intégré au couvercle du moule, et les espaceurs en sont dissociables.

L'étape suivante du procédé est l'étape de moussage in situ, dans laquelle on injecte la mousse ou le mélange précurseur de mousse à l'intérieur de la cavité de moulage, ladite mousse étant destinée à former le corps 2 de l'élément de garnissage 1.

Dans le cas où la coiffe est disposée sur la cuve du moule, l'injection est réalisée sur la surface interne de la coiffe. Et, lorsque, suivant une autre réalisation, la coiffe est disposée sur le couvercle, l'injection est réalisée sur la cuve du moule, ou le cas échéant sur la couche de matériau formant l'autre partie du revêtement.

L'élément de garnissage 1 est alors moulé de sorte que la mousse remplisse la cavité de moulage en venant enrober la nappe 3 ainsi que son dispositif de maintien en suspension. Cette étape s'effectue après fermeture du moule.

L'élément de garnissage 1 intégrant la nappe de détection 3 est ensuite démoulé. Lors du démoulage, il est prévu que le dispositif de maintien soit retiré de l'élément de garnissage 1, de sorte que ce dernier comprenne des zones dépourvues de mousse correspondant aux zones où se trouvait le dispositif avant démoulage. Ces zones dépourvues de mousse situées au voisinage de la nappe permettent une bonne déformation de la nappe 3 au sein de la mousse, ce qui, combiné à une augmentation de la compression au niveau de la périphérie desdites zones, améliore ses performances de détection.

Ainsi, si le dispositif est intégré au moule, ledit dispositif demeure à l'intérieur du moule lors de l'étape de démoulage, et, si au moins une partie du dispositif est dissociable du moule, celle-ci est retirée de la pièce après démoulage.

L'utilisation du dispositif de maintien selon son premier mode de réalisation, à savoir lorsqu'il se présente sous forme de lames 4, a pour conséquence de laisser dans la pièce finale des zones dépourvues de mousse ayant la forme desdites lames. En outre, selon un exemple de réalisation, les lames 4 peuvent être articulées par rapport au moule, ce qui facilite l'étape de démoulage.

Les deux autres modes de réalisation du dispositif induisent la présence de zones dépourvues de mousse ayant la forme respectivement des tiges 9 ou des cônes 10, la forme conique facilitant plus particulièrement l'étape de démoulage.

En particulier, lorsque le dispositif est sous sa forme représentée sur les figures 4a et 4b, les orifices présents dans la mousse, à la suite du retrait des cônes 10b, sont de diamètre important. Cet arrangement présente l'avantage de favoriser la déformation de la nappe 3, et par conséquent ses performances en terme de détection, et ce avec une nappe 3 située à une profondeur telle que le confort et l'aspect du siège s'en trouvent améliorés.

Quel que soit le mode de réalisation utilisé, la forme et l'emplacement des zones dépourvues de mousse laissées par le dispositif de maintien sont prévus pour respecter le confort de l'utilisateur du siège.

Après démoulage, la nappe 3 est placée, dans l'élément 1, à une profondeur donnée : cette profondeur est comprise entre 10 et 30 mm de la surface de l'élément 1 sur laquelle l'enfoncement doit être détecté, par exemple 20 mm, pour les modes de réalisation représentés sur les figures 1, 2 et 3, et est supérieure ou égale à 30 mm de cette surface, par exemple 40 mm, pour le mode de réalisation représenté sur la figure 4.

Selon une deuxième variante du procédé de réalisation de l'élément 1, on injecte directement la mousse dans la cavité de moulage contre les parois de celle-ci. On forme ainsi le corps en mousse 2 qui enrobe la nappe de détection 3. Après démoulage de ce corps, on lui associe la coiffe formant revêtement.

## Revendications

1. Elément de garnissage (1) pour siège de véhicule automobile, comprenant un corps en mousse (2) pourvu d'un revêtement, et une nappe de détection (3) de l'enfoncement dudit élément (1), **caractérisé en ce que** la nappe de détection (3) est enrobée dans le corps en mousse (2) de sorte à être positionnée à l'intérieur dudit corps (2) à une profondeur prédéterminée.

2. Elément selon la revendication 1, **caractérisé en ce que** la nappe (3) est enveloppée dans un fourreau de protection.

3. Elément selon la revendication 1 ou 2, **caractérisé en ce que** la nappe (3) est positionnée à une profondeur comprise entre 10 et 30 mm de la surface de l'élément (1 ) sur laquelle l'enfoncement doit être détecté.

4. Elément selon la revendication 1 ou 2, **caractérisé en ce que** la nappe (3) est positionnée à une profondeur supérieure ou égale à 30 mm de la surface de l'élément (1) sur laquelle l'enfoncement doit être détecté.

5. Elément selon l'une des revendications 1 à 4, **caractérisé en ce qu'**il comprend en outre une nappe chauffante.

6. Elément selon l'une des revendications 1 à 5, **caractérisé en ce que** le corps en mousse (2) comprend des zones dépourvues de mousse prévues au voisinage de la nappe (3).

7. Moule pour la réalisation d'un élément de garnissage selon l'une des revendications 1 à 6, du type comprenant une cuve et un couvercle définissant entre eux une cavité de moulage lorsque le moule est fermé, **caractérisé en ce qu'**il comprend en outre un dispositif de maintien en suspension de la nappe (3) dans la cavité de moulage suivant les directions X, Y et Z.

8. Moule selon la revendication 7, **caractérisé en ce que** le dispositif de maintien comprend des moyens de positionnement de la nappe dans la cavité de moulage suivant la direction Z, lesdits moyens étant associés au couvercle.

9. Moule selon la revendication 7, **caractérisé en ce que** le dispositif de maintien comprend des moyens de positionnement de la nappe dans la cavité de moulage suivant la direction Z, et un support (6) destiné à maintenir lesdits moyens de positionnement dans la cavité de moulage.

10. Moule selon la revendication 9, **caractérisé en ce que** les moyens de positionnement suivant Z comprennent des espaceurs associés au support (6).

11. Moule selon la revendication 10, **caractérisé en ce que** les espaceurs sont formés de tiges (9).

12. Moule selon la revendication 10, **caractérisé en ce que** les espaceurs sont formés de cônes (10).

13. Moule selon l'une des revendications 7 à 12, **caractérisé en ce que** le dispositif de maintien en suspension est intégré au moule.

14. Moule selon l'une des revendications 7 à 12, **caractérisé en ce qu'**au moins une partie du dispositif de maintien en suspension est dissociable du moule.

15. Procédé de réalisation d'un élément de garnissage selon l'une des revendications 1 à 6, utilisant un moule selon l'une des revendications 7 à 14, ledit procédé comprenant les étapes successives suivantes :
- prévoir une coiffe formant au moins une partie du revêtement ;
- disposer la coiffe sur une partie de la surface de la cavité de moulage ;
- associer la nappe (3) au dispositif de maintien en suspension, de sorte que la nappe (3) soit maintenue en suspension dans la cavité de moulage suivant les directions X, Y et Z ;
- injecter une mousse ou un mélange précurseur de mousse à l'intérieur de la cavité de moulage ;
- mouler l'élément (1 ) de sorte que la mousse remplisse la cavité de moulage en venant enrober la nappe (3) ;
- démouler l'élément (1) intégrant la nappe (3), de sorte à laisser dans ledit corps des zones dépourvues de mousse.

16. Procédé selon la revendication 15, **caractérisé en ce que** la coiffe est disposée sur la cuve du moule, le mélange précurseur de mousse ou la mousse étant injecté(e) sur la surface interne de la coiffe.

17. Procédé selon la revendication 15, **caractérisé en ce que** la coiffe est disposée sur le couvercle du moule, le mélange précurseur de mousse ou la mousse étant injecté(e) dans la cuve du moule.

18. Procédé de réalisation d'un élément de garnissage selon l'une des revendications 1 à 6, utilisant un moule selon l'une des revendications 7 à 14, ledit procédé comprenant les étapes successives suivantes :
- associer la nappe (3) au dispositif de maintien en suspension, de sorte que la nappe (3) soit maintenue en suspension dans la cavité de moulage suivant les directions X, Y et Z ;
- injecter une mousse ou un mélange précurseur de mousse à l'intérieur de la cavité de moulage ;
- mouler le corps en mousse (2) de sorte que la mousse remplisse la cavité de moulage en venant enrober la nappe (3) ;
- démouler ledit corps intégrant la nappe (3), de sorte à laisser dans ledit corps des zones dépourvues de mousse ;
- prévoir une coiffe formant au moins une partie du revêtement ;
- associer ladite coiffe au corps en mousse (2) après le démoulage de celui-ci.

19. Siège de véhicule automobile, dans lequel l'assise et/ou le dossier sont formés d'un élément de garnissage (1) selon l'une quelconque des revendications 1 à 6.
